(19) **Europäisches Patentamt**
**European Patent Office**
**Office européen des brevets**

(11) **EP 2 856 040 B1**

(12) **FASCICULE DE BREVET EUROPEEN**

(45) Date de publication et mention
de la délivrance du brevet:
**05.10.2016 Bulletin 2016/40**

(21) Numéro de dépôt: **13730031.5**

(22) Date de dépôt: **04.06.2013**

(51) Int Cl.:
**F25B 27/00** $^{(2006.01)}$   **G05B 15/02** $^{(2006.01)}$
**G05F 1/66** $^{(2006.01)}$   **F24H 4/02** $^{(2006.01)}$
**F24H 9/20** $^{(2006.01)}$

(86) Numéro de dépôt international:
**PCT/FR2013/051257**

(87) Numéro de publication internationale:
**WO 2013/182799 (12.12.2013 Gazette 2013/50)**

(54) **PROCÉDÉ DE RÉGULATION D'UNE INSTALLATION COMPRENANT DES APPAREILS DE COGÉNERATION ET DES SYSTÈMES THERMODYNAMIQUES DESTINES A LA CLIMATISATION ET/OU AU CHAUFFAGE**

VERFAHREN ZUR STEUERUNG EINES WERKS MIT KRAFT-/WÄRMEKOPPLUNGSANLAGEN UND THERMODYNAMISCHES KLIMATISIERUNGS- UND/ODER HEIZSYSTEM

METHOD OF REGULATING A PLANT COMPRISING COGENERATING INSTALLATIONS AND THERMODYNAMIC SYSTEMS INTENDED FOR AIR CONDITIONING AND/OR HEATING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.06.2012   FR 1255175**

(43) Date de publication de la demande:
**08.04.2015   Bulletin 2015/15**

(73) Titulaire: **SILOUEST**
**1180 Uccle (BE)**

(72) Inventeur: **MOREAU, Christian**
**F-01700 Neyron (FR)**

(74) Mandataire: **Schmidt, Martin Peter**
**IXAS Conseil**
**15, rue Emile Zola**
**69002 Lyon (FR)**

(56) Documents cités:
**WO-A1-2011/015731   FR-A1- 2 927 161**

**Description**

**Domaine de l'invention**

L'invention concerne un procédé de régulation d'une installation associant un (ou plusieurs) appareil(s) de cogénération et un ou plusieurs système(s) thermodynamiques destiné(s) à la climatisation et/ou au chauffage. Ces systèmes thermodynamiques étant plus communément appelés : climatiseur (réversible ou non), refroidisseur d'eau ou pompe à chaleur (réversible ou pas).

**État de la technique**

Il existe sur le marché des appareils dits de cogénération qui produisent simultanément de l'énergie électrique et de la chaleur. Ces appareils de cogénération délivrent, généralement sur un réseau électrique associé, une puissance électrique donnée. Cette puissance électrique est la principale consigne à respecter par l'appareil lors de son fonctionnement. Le réseau électrique associé est le plus souvent un réseau de basse tension. Lorsqu'il est associé à un réseau de ce type, l'appareil de cogénération fonctionne en mode synchronisé à 50 Hz (en Europe) ou 60 Hz (« Synchrocoupling »). Les pics de demande électrique supérieurs à la puissance que l'appareil est susceptible de fournir sont absorbés par le réseau électrique associé. L'énergie thermique délivrée par l'appareil de cogénération lorsqu'il fonctionne dépend de la puissance électrique de consigne. Cette énergie thermique est envoyée à un réseau de chaleur par l'intermédiaire d'un fluide caloporteur. Lorsque l'énergie thermique produite est supérieure au besoin de chaleur, le surplus est évacué par un dispositif externe (par exemple des aéroréfrigérants). Lorsque l'énergie thermique produite est inférieure au besoin thermique, un complément est apporté par un autre dispositif externe (par exemple une chaudière). Les générateurs de ces appareils de cogénération sont habituellement des moteurs thermiques classiques (mono ou multicylindres 4 temps) reliés à un alternateur. Il commence à apparaitre par ailleurs d'autres types de générateurs comme par exemple les piles à combustible.

Il existe d'autre part sur le marché climatiseurs, des refroidisseurs d'eau et des pompes à chaleur (réversibles ou non) basées sur le cycle thermodynamique de réfrigération/chauffage par compression mécanique. Ces produits utilisent dans leur immense majorité de l'énergie électrique (habituellement issue du réseau basse tension).

Cette énergie électrique est utilisée par un ensemble moteur & compresseur souvent combiné en un équipement appelé alors motocompresseur qui transfère par l'intermédiaire d'un fluide frigorigène la chaleur d'une source (par exemple l'air extérieur, la chaleur issue d'une sonde géothermique ou d'une nappe phréatique) vers une charge (par exemple l'eau d'un circuit de chauffage ou l'eau chaude sanitaire). La puissance thermique transmise à la source est la principale consigne que doit respecter la pompe à chaleur. La puissance électrique consommée par la pompe à chaleur est induite par ce besoin de puissance thermique. La liaison n'est pas totalement directe car des phénomènes comme la taille du compresseur, la valeur du courant d'appel, les conditions de fonctionnement interviennent sur la puissance instantanée demandée. La puissance disponible sur le réseau électrique est rarement un problème car l'électricité est produite par des centrales de taille importante (typiquement centrale nucléaire ou turbine à gaz), avec une gestion centralisée et permanente de l'énergie.

Il existe enfin des installations associant un appareil de cogénération et une pompe à chaleur, tel que cela est décrit par exemple dans le brevet FR 2 927 161 et la demande de brevet WO 2011/01573 au nom de la demanderesse. Dans les dispositifs de ces documents, l'appareil de cogénération est de préférence non raccordé au réseau, mais peut l'être de façon optionnelle.

Plus précisément, le brevet FR 2 927 161 décrit un dispositif thermodynamique multi-énergie à production simultanée d'eau chaude, eau tiède, eau froide et d'électricité, et plus particulièrement un système ou dispositif comportant une pompe à chaleur actionnée par un générateur de courant alternatif permettant la production simultanée d'électricité, d'eau chaude par exemple pour le chauffage de bâtiments, d'eau très chaude, par exemple de l'eau chaude sanitaire, et d'eau froide, par exemple pour la climatisation. Le dispositif décrit dans ce brevet est une association d'un appareil de cogénération qui est un moteur à combustion ou une pile à combustible, et d'une pompe à chaleur.

La demande de brevet WO 2011/01573 concerne un système ou dispositif de conception modulaire comportant au moins un module générateur de courant électrique et un ou plusieurs modules parmi les types suivants : pompes à chaleur, réfrigération ou modules mixtes pompe à chaleur/réfrigération, permettant la production simultanée d'eau chaude par exemple pour le chauffage de bâtiments, d'eau très chaude, par exemple de l'eau chaude sanitaire, d'eau froide, par exemple pour la climatisation, éventuellement de fluide frigorigène typiquement pour la réfrigération et éventuellement d'électricité.

Dans les installations décrites par les documents ci-dessus, la ou les consignes à respecter sont des consignes thermiques, l'électricité étant produite, en qualité et en quantité, de façon adaptée pour assurer les besoins du (ou des) compresseur(s) de la (ou des) pompe(s) à chaleur afin qu'il(s) transfère(nt) l'énergie nécessaire au fluide frigorigène. L'installation est gérée par un appareil de commande (« superviseur ») intégré ou non à l'appareil comportant une partie matérielle (appelée communément « hardware ») et une partie d'algorithmes (appelée communément « software »). L'association d'un appareil de cogénération et d'une pompe à chaleur est intéressante car cela permet de mutualiser les énergies thermiques produites par chaque appareil et cela permet également le cas échéant une approche « multi-énergie » : électricité + combustible (gaz naturel ou autre : biogaz, diesel, hydrogène, etc....). Cependant la mise en oeuvre optimisée de ces deux technologies sur une même application, sur un même site, nécessite un procédé de gestion capable de prendre en compte les contraintes liées à chaque appareil, et permettant ainsi une optimisation économique globale du système par mesure de la consommation et la production énergétique (thermique et électrique) en associant en fonction des tarifications en vigueur l'opportunité de choix strictement économique ou lié à des contraintes source d'énergie disponible (type, par exemple gaz naturel et biogaz et quantité)..

**Objet de l'invention**

Un premier but de l'invention est de fournir un procédé de régulation d'une installation comprenant un (ou plusieurs) appareil(s) de cogénération et un ou plusieurs système(s) thermodynamique(s) (par exemple pompe à chaleur) pompe à chaleur (et/ou un appareil de réfrigération : climatiseur ou refroidisseur d'eau),

Un autre but de l'invention est de fournir un procédé de régulation d'une installation comprenant un appareil de cogénération et une pompe à chaleur (et/ou un appareil de réfrigération), lesdits appareil de cogénération et pompe à chaleur ne comportant ni capteurs, ni hardware, ni software leur permettant d'échanger des informations afin de fonctionner entre eux de manière adaptée et optimisée.

Un autre but de l'invention est de permettre une optimisation simultanée thermique et électrique en prenant en compte les sources énergétiques disponibles et les coûts desdites sources.

Ces buts sont atteints grâce à un procédé de gestion d'une installation comprenant un ou plusieurs appareils de cogénération et un ou plusieurs systèmes thermodynamiques, tels que des pompes à chaleur, ainsi qu'une machine informatique, ledit procédé comprenant les étapes suivantes :

(a) On entre des données dites « données de base » dans ladite machine informatique, lesdites données de base comprenant au moins la tenue à l'impact électrique de l'appareil de cogénération, la valeur d'intensité maximale de la pompe à chaleur,

(b) on entre des données dites « données instantanées » dans ladite machine informatique, lesdites données instantanées comprenant au moins l'état de l'appareil de cogénération, l'état de la pompe à chaleur et la puissance électrique demandée par la pompe à chaleur,

(c) on définit des données dites « données cibles » à laquelle sont affectées une valeur respective dite « valeur cible » dans ladite machine informatique, ces données cibles comprenant au moins la production minimale et/ou maximale d'électricité par l'installation, éventuellement la consommation maximale d'électricité et d'énergie primaire, et au moins une parmi : les températures d'eau très chaude (T2), d'eau chaude (T1), d'eau froide (T3), d'évaporation de fluide frigorigène (T4, T5), et la demande en électricité du réseau local,

(d) on régule l'installation à l'aide de ladite machine informatique de manière à atteindre, pour chacune des données cibles sélectionnées, la ou les valeurs cibles qui leur ont été affectées, la régulation étant effectuée en comparant la valeur actuelle de la donnée cible sélectionnée, en prenant en compte la ou les données de base sélectionnées ainsi que la ou les données instantanées sélectionnées, et en ajustant au moins une donnée dite « donnée d'ajustement », de manière à rapprocher la valeur actuelle de chaque donnée cible sélectionnée de la valeur cible qui lui a été affectée à l'étape c), la au moins une donnée d'ajustement comprenant la puissance électrique fournie par l'appareil de cogénération.

Dans d'autres modes de réalisation, au moins une « donnée de base » supplémentaire de l'étape (a) est sélectionnée dans le groupe formé par (da1) le coût unitaire du combustible de chaque moteur à combustion (2), pile à combustible et pompe à chaleur à absorption utilisé dans le système; (da2) le contenu énergétique de chaque combustible ; (da3) l'impact $CO_2$ de chaque combustible par unité de masse ; (da4) le rendement énergétique de chaque moteur à combustion (2) en fonction de sa charge et de sa vitesse de rotation, ce qui permet de déterminer la quantité de $CO_2$ rejetée par unité de puissance mécanique produite par ce moteur à combustion (2) ; (da5) la puissance nominale à pleine charge de chaque moteur à combustion (2) en fonction de sa vitesse de rotation ; (da6) le pourcentage de puissance thermique récupérée sur le circuit de refroidissement du moteur à combustion (2) et le pourcentage de puissance thermique récupéré sur les gaz d'échappement et/ou la quantité de $CO_2$ rejetée par unité de puissance thermique produite par le moteur à combustion (2), (da7) le coût unitaire de l'énergie électrique fournie par le réseau externe ; (da8) la durée de vie de chaque générateur en fonction de sa charge ; (da9) le coût de maintenance de chaque générateur en fonction du nombre d'heures de fonctionnement; (da10) le coût de démontage et de remplacement de chaque générateur; (da11) la durée de vie, le coût de maintenance, le coût de démontage et de remplacement de chaque type de pompe à chaleur; (da12) le rendement de l'alternateur en fonction de la puissance électrique qu'il fournit, ce qui permet de déterminer la puissance mécanique demandée au moteur à combustion (2) pour une puissance électrique fournie ; (da13) le rendement de la pile à combustible en fonction de sa charge ; (da14) le rendement de l'onduleur de la pile à combustible ou des panneaux solaires photovoltaïques lorsqu'ils existent ; (da15) la consommation électrique et le débit de fluide de la pompe de circulation des capteurs solaires ; (da16) le prix de vente unitaire de l'énergie électrique fournie au réseau externe ;

Dans d'autres modes de réalisation, au moins une « donnée instantanée » supplémentaire est sélectionnée dans le groupe formé par : (db1) la puissance électrique instantanée produite par chaque générateur de courant présent ; (db2) le régime de rotation de chaque moteur à combustion (2) ; (db3) la consommation instantanée en combustible de l'installation (1); (db4) la température du fluide récupérant l'énergie thermique du moteur a combustion (2) ; (db5) la puissance électrique instantanée consommée par l'installation (1) auprès du réseau, obtenue par une mesure directe; (db6) la puissance instantanée fournie au réseau par l'installation (1), obtenue par une mesure directe ; (db7) le courant, la tension ou la puissance électrique instantanée produite par le panneau solaire photovoltaïque (si ce panneau est présent) ; (db8) la température T1 instantanée ; (db9) la température T2 instantanée ; (db10) la température T3 instantanée; (db11) la température T4 instantanée (db12) la température T5 instantanée (db13) la température de l'air ambiant; (db14) le nombre d'heures de fonctionnement de chaque générateur de courant électrique (principalement moteur à combustion 2 et pile à combustible; (db15) le nombre d'heures de fonctionnement de chaque circuit de pompe à chaleur de l'installation (type à compression de vapeur ou à absorption).

Dans d'autres modes de réalisation, au moins une « donnée cible » supplémentaire est sélectionnée dans le groupe formé par : (dc1) la température T1 et son évolution en fonction notamment de la température extérieure ; (dc2) la température T2 et son évolution en fonction notamment de la température extérieure ; (dc3) la température T3 et son évolution en fonction notamment de la température extérieure ; (dc4) la température T4 et son évolution en fonction notamment de la température souhaitée dans l'enceinte réfrigérée ; (dc5) la température T5 et son évolution en fonction notamment de la température souhaitée dans l'enceinte réfrigérée (dc6) le COP global comme étant le COP global maximal pour l'installation (1) ou l'impact global minimal $CO_2$ de l'installation (1); (dc7) le coût énergétique comme étant le coût énergétique minimal de l'installation (1); (dc8) le coût de fonctionnement total comme étant le coût de fonctionnement total minimal de l'installation (1).

Dans d'autres modes de réalisation, au moins une « donnée d'ajustement » supplémentaire est sélectionnée dans le groupe formé par: (dd1) le type, le nombre de générateurs de courant en fonctionnement, et la puissance fournie électrique par chacun desdits générateurs ; (dd2) l'affectation des puissances électriques fournies par le ou les générateurs respectivement à l'installation et au réseau externe à l'installation (1); (dd3) le type et le nombre de pompes à chaleur en fonctionnement ; (dd4) dans le cas des pompes à chaleur par compression de vapeur, le réglage de débit volumétrique (exprimé en pourcent) imposé par la régulation aux compresseurs pour optimiser l'installation (1). La valeur « actuelle » de la au moins une donnée cible sélectionnée est déterminée de temps en temps ou de manière régulière ou de manière continue.

Lesdites données de base peuvent être entrées dans la machine informatique soit lors de sa programmation initiale, soit lors de la mise en route de l'installation, soit encore par l'utilisateur de l'installation, au cours du temps pendant l'utilisation de l'installation.

Dans un mode de réalisation particulier, le procédé de régulation selon l'invention comprend en outre les étapes de :

- Démarrage de l'appareil de cogénération et démarrage de la pompe à chaleur,
- Contrôle (i.e. limitation à une valeur maximale) de la puissance électrique demandée par la pompe à chaleur, de préférence par signal analogique ou tout ou rien, de façon à éviter une surcharge de l'appareil de cogénération.
- Mise en route et contrôle de pompes telles que les pompes à eau de chauffage & climatisation, les pompes d'eau chaude sanitaire,
- Mise en route et contrôle des vannes deux et trois voies hydrauliques,
- Mise en adéquation, en utilisant des algorithmes de modélisation et de commande, du besoin d'électricité de la pompe à chaleur et de la production d'électricité par l'appareil de cogénération, de manière à respecter les consignes (valeurs cibles) de puissances thermiques (eau chaude de chauffage, eau chaude sanitaire, eau froide de climatisation...), et éventuellement la consigne (valeur cible) de demande d'électricité sur le réseau local, tout en obtenant une consommation résultante minimale d'énergie primaire et d'électricité.

Dans un mode de réalisation, le contrôle de la puissance électrique demandée par la pompe à chaleur peut être obtenu par la limitation de la pente de mise en charge de la sortie d'eau vers le client (typiquement en degrés/minute), c'est-à-dire par la limitation de la vitesse de montée en température de l'eau du circuit de chauffage.

Le calcul de mise en adéquation fait intervenir différents paramètres, comprenant des paramètres du milieu extérieur aux appareils, tels que la température de l'air extérieur, la date et l'heure (pour tenir compte de la tarification heures pleines/heures creuses par exemple), la limitation de montée en température de l'eau, et des paramètres liés aux appareils, tels que des informations sur l'état des pompes ou des vannes. Les résultats de ce calcul produisent la mise en route de divers actuateurs (pompes, vannes hydrauliques).

Dans le cadre de la gestion et de l'optimisation de la consommation d'énergie, le procédé de gestion selon l'invention gère le type d'énergie consommée par l'installation, en particulier l'électricité et l'énergie fossile telle que le gaz naturel, et éventuellement également le biogaz ou fuel, l'hydrogène, le réseau électrique issu de l'énergie renouvelable, en prenant en compte la quantité demandé et le coût de cette énergie. Le choix des types d'énergie peut être automatique en vue d'un coût énergétique instantané minimal, ou d'un coût de possession minimal faisant intervenir le coût de maintenance. Ce choix des types d'énergie énergétique peut être issu également d'un calendrier ou d'une demande client, de l'imposition en local ou à distance d'un réseau intelligent du type « Smart Grid ».

En outre, dans un mode de réalisation particulier, le procédé de gestion selon la présente invention prend en compte des prévisions météo, de manière à gérer le stockage et le déstockage de l'énergie en fonction des besoins. Ce stockage peut se faire dans les murs du bâtiment auquel est associée l'installation, ou dans un stockage thermique dédié, tel que, de manière non limitative, un ballon tampon d'eau.

**Description de l'invention**

*Description des figures*

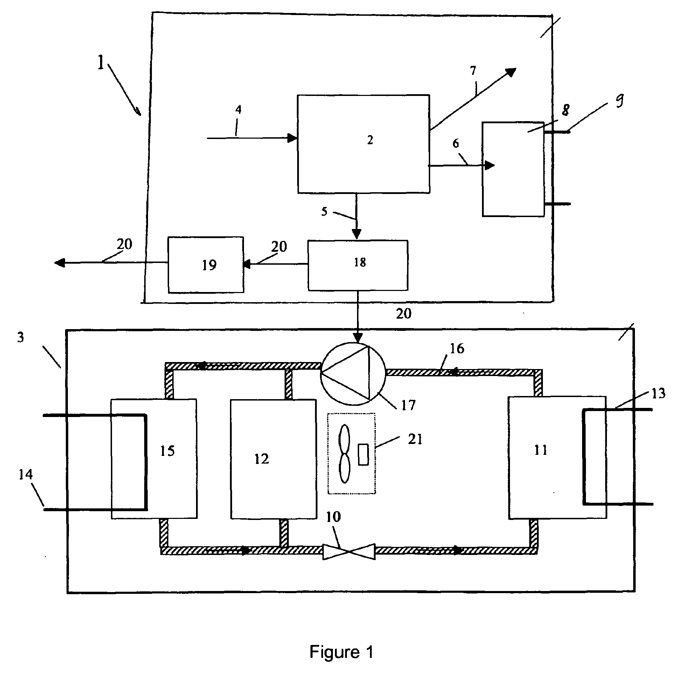

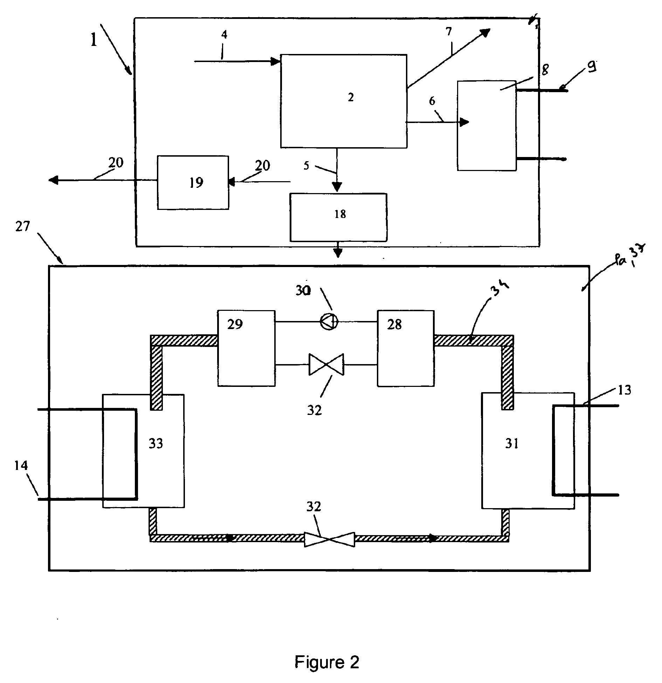

Les figures 1 et 2 se réfèrent à l'installation régulée par le procédé selon l'invention.

La figure 1 représente un schéma de principe de l'installation régulée par le procédé selon l'invention, dans le cas où le générateur de courant alternatif est un moteur à combustion relié à un alternateur et la pompe à chaleur utilise le cycle de réfrigération par compression de vapeur.

La figure 2 représente un schéma de principe de l'installation régulée par le procédé selon l'invention, dans le cas où le générateur de courant alternatif est un moteur à combustion relié à un alternateur et la pompe à chaleur utilise le cycle de réfrigération par absorption.

*Liste des repères*

| | |
|---|---|
| 1 | Installation régulée par le procédé selon l'invention |
| 2 | Moteur à combustion |
| 3 | Pompe à chaleur |
| 4 | Entrée de carburant liquide ou gazeux |
| 5 | Énergie mécanique produite par le moteur |
| 6 | Chaleur émise par le générateur de courant alternatif en fonctionnement |
| 7 | Pertes d'énergie |
| 8 | Échangeur de chaleur pour l'échange de chaleur entre le générateur de courant alternatif et l'eau très chaude |
| 9 | Circuit d'eau très chaude |
| 10 | Détendeur |
| 11 | Échangeur de chaleur réversible - Condenseur en mode chauffage, échangeur sur la charge en mode chauffage |
| 12 | Échangeur de chaleur réversible - Évaporateur en mode chauffage, échangeur sur la source de chaleur en mode chauffage |
| 13 | Circuit d'eau - circuit d'eau froide lorsque la pompe à chaleur est en mode climatisation |
| 14 | Circuit d'eau chaude |
| 15 | Échangeur de chaleur |
| 16 | Circuit de fluide frigorigène |
| 17 | Compresseur |
| 18 | Alternateur |
| 19 | Accumulateur électrique |
| 20 | Énergie électrique |

21    Motoventilateur
24    Convertisseur de courant continu en courant alternatif
27    Pompe à chaleur utilisant le cycle par absorption
28    Absorbeur
29    Générateur
30    Pompe de circulation
31    Évaporateur du cycle à absorption
32    Détendeur adapté au cycle à absorption
33    Condenseur du cycle à absorption
34    Fluide frigorigène
35    Absorbeur

Définitions

Dans le présent document, on entend par

▪ Système thermodynamique de type pompe à chaleur ou réfrigération : Dispositif comportant un compresseur et plusieurs échangeurs dans lesquels circule un fluide de transfert spécifique appelé usuellement fluide frigorigène, ledit dispositif permettant d'absorber de l'énergie thermique à une première température, et de restituer de l'énergie thermique à une seconde température, la seconde température étant plus élevée que la première.
▪ Échangeur de chaleur : Dispositif destiné à transférer de la chaleur entre plusieurs circuits.
▪ Fluide de transfert : Fluide caloporteur utilisé pour transférer de la chaleur ; les exemples classiques sont le fluide frigorigène, l'eau ou l'eau glycolée parfois appelé saumure.
▪ Source thermique ou source : Par convention, les termes source et charge thermique se réfèrent au mode chauffage. La source est le milieu d'où l'on extrait la chaleur en mode chauffage. Cette extraction de chaleur s'effectue avec certaines caractéristiques physiques comme l'inertie thermique ou la puissance disponible qui caractérisent la source. On peut noter que le terme source est impropre en mode refroidissement car on y rejette en fait de la chaleur issue du bâtiment.
▪ Charge thermique ou charge : La charge est le milieu où l'on rejette la chaleur en mode chauffage. Ce rejet de chaleur s'effectue avec certaines caractéristiques physiques comme l'inertie thermique ou la puissance disponible qui caractérisent la charge, de même la charge est le lieu d'où l'on retire la chaleur en mode refroidissement.
▪ COP ou coefficient de performance : le COP ou coefficient de performance d'un système en mode chauffage est défini comme le rapport entre la puissance de chauffage disponible sur la puissance électrique consommée par le système. Dans le système selon l'invention, on entend par COP « équivalent électrique » le COP qu'aurait l'installation si on utilisait de l'électricité à la place du gaz ou biocarburant.
▪ Générateur de courant alternatif : Dispositif qui génère du courant alternatif soit directement soit par l'intermédiaire d'un convertisseur additionnel qui transforme le courant continu généré en courant alternatif.
▪ Moteur à combustion : Moteur qui, par combustion, transforme l'énergie chimique contenue dans un combustible en énergie mécanique.
▪ Moteur à combustion interne : Moteur à combustion dont la combustion du combustible produisant l'énergie nécessaire au fonctionnement se passe dans le moteur lui-même, typiquement dans une chambre de combustion.
▪ Panneau solaire photovoltaïque : Générateur électrique de courant continu constitué d'un ensemble de cellules photovoltaïques reliées entre elles électriquement.
▪ Capteur solaire thermique : Dispositif dans lequel la température d'un milieu solide, liquide ou gazeux est augmentée par absorption totale ou partielle du rayonnement solaire.
▪ Pile à combustible : Dispositif produisant de l'électricité grâce à l'oxydation sur une électrode d'un combustible réducteur (par exemple l'hydrogène) couplée à la réduction sur l'autre électrode d'un oxydant, tel que l'oxygène de l'air.
▪ « Cogénération » : ensemble formé d'une ou plusieurs cogénérations, comprenant un ou plusieurs ensemble générateurs d'électricité (de type moteur thermique + alternateur et/ou de type pile à combustible.

Dans la suite de ce document, on appellera pompe à chaleur un ensemble formé d'un ou plusieurs circuits, voire d'une ou plusieurs pompes à chaleur munies elle(s) même(s) d'un ou plusieurs circuits.

*Description détaillée*

L'invention décrite ici concerne un procédé de gestion permettant d'optimiser le fonctionnement d'une installation dotée d'un appareil de cogénération, raccordable ou non raccordable au réseau et d'une pompe à chaleur. L'électricité issue de l'appareil de cogénération est utilisée en particulier, mais non exclusivement, pour alimenter la pompe à chaleur. La consigne principale à respecter est le besoin thermique, c'est-à-dire la puissance calorifique, mais éventuellement aussi la puissance frigorifique et/ou une puissance électrique, demandé par le système

Quelques auxiliaires de puissance électrique modérée peuvent être ajoutés à cet ensemble de façon à assurer son bon fonctionnement. Il s'agit typiquement de pompes à eau de circulation, d'éclairage.

La présente invention a pour objet un procédé de régulation d'une installation comportant au moins un appareil de cogénération et au moins une pompe à chaleur.

L'installation à réguler, décrite en référence aux figures 1 et 2, comprend au moins un appareil de cogénération comprenant un ensemble générateur de courant qui comprend soit un moteur à combustion (2) relié à un alternateur (18) soit une pile à combustible. Chacun des générateurs de courant comporte un échangeur de chaleur (8) produisant de l'eau très chaude à température T2, ladite installation (1) ou ledit ensemble générateur de courant comprenant, optionnellement, un ou plusieurs autres générateurs de courant, sélectionnés dans le groupe constitué par un moteur à combustion (2) relié à un alternateur (18), une pile à combustible (non représentée), un panneau solaire photovoltaïque (non représenté), ou une éolienne.

L'installation à réguler comprend également éventuellement un accumulateur électrique (19).

L'installation à réguler comprend également au moins une pompe à chaleur (3), ou un ensemble de réfrigération, ladite pompe à chaleur ou ledit ensemble de réfrigération étant soit du type à compression de vapeur soit du type à absorption.

Lorsque ladite pompe à chaleur ou ledit ensemble de réfrigération est du type à compression de vapeur il comprend au moins un compresseur (17) de fluide frigorigène, un premier échangeur de chaleur (11) situé à l'aspiration du compresseur (17) lorsque la pompe à chaleur est en mode climatisation, un détendeur (10), et un second échangeur de chaleur (12) placé au refoulement du compresseur (17) lorsque la pompe à chaleur est en mode climatisation. Ladite pompe à chaleur ou ledit ensemble de réfrigération comprend en outre optionnellement un troisième échangeur de chaleur (15)

Lorsque ladite pompe à chaleur ou ledit ensemble de réfrigération est du type à absorption, représenté par la figure 2, il comprend alors un absorbeur (28), une pompe de circulation (30), un générateur de vapeur (29), un premier échangeur de chaleur (31) situé à l'entrée dudit absorbeur (28), un détendeur (32) et un second échangeur de chaleur (33) situé à la sortie dudit générateur de vapeur (29).

Le compresseur (17) ou la pompe de circulation (30) est entraîné par un moteur électrique, qui peut être alimenté par un desdits générateurs de courant.

L'installation à réguler comprend au moins un module Pc Pa dit « module pompe à chaleur » ou au moins un module Pr dit « module de réfrigération » ou au moins un module Pm dit « mixte : pompe à chaleur et réfrigération».

S'il s'agit d'un module pompe à chaleur par compression Pc, chacun des au moins un ensemble pompe à chaleur comprend au moins un compresseur (17) de fluide frigorigène, ledit premier échangeur de chaleur (11), ledit détendeur (10), ledit second échangeur de chaleur (12).

S'il s'agit d'un module pompe à chaleur par absorption Pa, chacun des au moins un ensemble pompe à chaleur comprend au moins un absorbeur (28), ladite pompe de circulation (30), ledit générateur de vapeur (29), ledit premier échangeur de chaleur (31), ledit détendeur (32) et ledit second échangeur de chaleur (33) ;

S'il s'agit d'un module de réfrigération Pr, il comprend au moins un ensemble de réfrigération comprenant au moins un compresseur (17) de fluide frigorigène, ledit détendeur (10), ledit second échangeur de chaleur (12), ainsi que des conduits de fluide frigorigène (16a, 16b) destinés à être connectés à un échangeur de fluide frigorigène air/eau externe au module Pr.

S'il s'agit d'un module mixte Pm, il comprend au moins deux ensembles l'un du type pompe à chaleur et l'autre du type réfrigération, où l'ensemble du type pompe à chaleur comprend au moins un compresseur (17) de fluide frigorigène, ledit premier échangeur de chaleur (11), ledit détendeur (10), ledit second échangeur de chaleur (12), et l'ensemble du type réfrigération comprend au moins un compresseur (17) de fluide frigorigène, ledit détendeur (10), ledit second échangeur de chaleur (12), ainsi que des conduits de fluide frigorigène (16a, 16b) destinés à être connectés à un échangeur de fluide frigorigène air/eau externe au module Pm

Dans un mode de réalisation, l'installation à réguler permet la production simultanée d'eau très chaude à température T2, d'eau chaude à température T1 et/ou d'eau froide à température T3, et d'électricité, et éventuellement également la production de fluide frigorigène à température d'évaporation T4, et/ou la production de fluide frigorigène à température d'évaporation T5.

Dans un mode de réalisation l'appareil de cogénération est un moteur à combustion, de préférence un moteur à combustion interne. Il est alimenté de préférence par du gaz naturel. En fonction des besoins, il peut également être alimenté par d'autres carburants gazeux ou liquides tels que de l'essence, du fioul, du kérosène, de l'alcool, des biocarburants tels que des huiles végétales, du bioéthanol, du biogaz.

Il peut s'agir aussi d'autres types de moteurs à combustion, tels que des moteurs à combustion externe comme les moteurs Stirling.

Dans un autre mode de réalisation l'appareil de cogénération est une pile à combustible. Il peut s'agit de n'importe quel type de pile à combustible connu de l'homme de métier, fonctionnant typiquement, mais non exclusivement, à des températures inférieures à 200°C, mais pouvant dans certains cas atteindre une température de 800°C à 1000°C (par exemple une pile de type «oxyde solide») et alimentée par un combustible approprié, tel que l'hydrogène, le méthane ou un mélange d'hydrocarbures tel que l'essence ou le fuel. La pile à combustible est composée au minimum d'un coeur de pile alimenté en hydrogène (cas des coeurs de piles à combustible basées sur des membranes protoniques) ou alimenté par la pluralité de combustibles déjà citée (cas des coeurs de pile haute température de type oxyde solide). Si la pile est du type basé sur des membranes protoniques et si l'hydrogène n'est pas directement disponible, alors la pile à combustible peut être composée d'un reformeur et d'un coeur de pile. Le reformeur a pour rôle d'extraire l'hydrogène nécessaire au coeur de pile à partir de combustibles plus complexes chimiquement tels que le gaz naturel, le méthane, le biogaz ou un mélange d'hydrocarbures. L'hydrogène ainsi extrait alimente le coeur de pile basé sur des membranes protoniques.

Dans certains modes de réalisation, l'installation comporte en outre des panneaux solaires photovoltaïques qui peuvent être n'importe quel type de panneau connu de l'homme de métier, en particulier, le semi-conducteur constituant les cellules photovoltaïques peut être, de façon non limitative, du silicium amorphe, polycristallin ou monocristallin, un matériau organique semi-conducteur, ou une combinaison de ceux-ci. On peut utiliser une pluralité de panneaux solaires photovoltaïques.

Dans des modes de réalisations préférés, la pompe à chaleur de l'installation est réversible, ce qui signifie qu'elle peut fonctionner en mode privilégiant le chauffage (« mode chauffage ») ou en mode privilégiant le refroidissement (« mode climatisation »). Pour ce faire, une vanne quatre voies d'inversion de cycle 46 (fig.8c) est installée sur le circuit de fluide frigorigène 16.

Dans le cas où la pompe à chaleur 3 est réversible, les échangeurs de chaleur 11 et 12 sont des échangeurs réversibles.

L'installation gérée par le procédé selon la présente invention est en outre contrôlée par au moins une machine informatique comportant au moins un microprocesseur et au moins une interface d'entrée de données. Des données sont entrées dans le microprocesseur de ladite machine informatique par l'intermédiaire de ladite interface d'entrée de données.

La machine informatique permettant la mise en oeuvre du procédé selon l'invention comprend un logiciel de régulation s'appuyant sur une interface d'entrées de données. Elle est en outre connectée avec les capteurs nécessaires, tels que, mais de manière non limitative, un capteur de température extérieure, des capteurs de température d'entrée et de sortie d'eau, des capteurs de puissance et/ou d'intensités électriques, des capteurs de localisation type GPS. Certains de ces capteurs sont présents dans l'appareil de cogénération et la pompe à chaleur par construction, d'autres capteurs sont ajoutés en fonction des besoins liés à la mise en oeuvre du procédé selon l'invention. La machine informatique comprend également si nécessaire des cartes électroniques d'entrées/sorties, des cartes de calcul, des cartes de communication type GPRS ou Internet/Ethernet.

### *Régulation*

De manière générale, la présente invention concerne un procédé de gestion d'une installation comprenant un appareil de cogénération et une pompe à chaleur et une machine informatique, ledit procédé comprenant les étapes suivantes :

(a) On entre des données dites « données de base » dans ladite machine informatique, lesdites données de base comprenant au moins la « tenue à l'impact électrique » de l'appareil de cogénération, le « Imax » de la pompe à chaleur,

(b) on entre des données dites « données instantanées » dans ladite machine informatique, lesdites données instantanées comprenant au moins l'état de l'appareil de cogénération, l'état de la pompe à chaleur et la puissance électrique demandée par la pompe à chaleur

(c) on définit des données dites « données cibles » à laquelle sont affectées une valeur respective dite « valeur cible » dans ladite machine informatique, ces données cibles comprenant au moins la consommation minimale d'énergie primaire et d'électricité par l'installation, et l'un parmi : les T° T1, T2, T3, T4, T5, et la demande en électricité du réseau local,

(d) on régule l'installation à l'aide de ladite machine informatique de manière à atteindre, pour chacune des données cibles sélectionnées, la ou les valeurs cibles qui leur ont été affectées, la régulation étant effectuée en comparant la valeur actuelle de la donnée cible sélectionnée, en prenant en compte la ou les données de base sélectionnées ainsi que la ou les données instantanées sélectionnées, et en ajustant au moins une donnée dite « donnée d'ajustement », de manière à rapprocher la valeur actuelle de chaque donnée cible sélectionnée de la valeur cible qui lui a été affectée à l'étape c), la au moins une donnée d'ajustement comprenant la puissance électrique fournie par l'appareil de cogénération.

Dans d'autres modes de réalisation, au moins une « donnée de base » supplémentaire de l'étape (a) est sélectionnée dans le groupe formé par (da1) le coût unitaire du combustible de chaque moteur à combustion (2), pile à combustible et pompe à chaleur à absorption utilisé dans le système; (da2) le contenu énergétique de chaque combustible ; (da3) l'impact $CO_2$ de chaque combustible par unité de masse ; (da4) le rendement énergétique de chaque moteur à combustion (2) en fonction de sa charge et de sa vitesse de rotation, ce qui permet de déterminer la quantité de $CO_2$ rejetée par unité de puissance mécanique produite par ce moteur à combustion (2) ; (da5) la puissance nominale à pleine charge de chaque moteur à combustion (2) en fonction de sa vitesse de rotation ; (da6) le pourcentage de puissance thermique récupérée sur le circuit de refroidissement du moteur à combustion (2) et le pourcentage de puissance thermique récupéré sur les gaz d'échappement et/ou la quantité de $CO_2$ rejetée par unité de puissance thermique produite par le moteur à combustion (2), (da7) le coût unitaire de l'énergie électrique fournie par le réseau externe ; (da8) la durée de vie de chaque générateur en fonction de sa charge ; (da9) le coût de maintenance de chaque générateur en fonction du nombre d'heures de fonctionnement; (da10) le coût de démontage et de remplacement de chaque générateur; (da11) la durée de vie, le coût de maintenance, le coût de démontage et de remplacement de chaque type de pompe à chaleur; (da12) le rendement de l'alternateur en fonction de la puissance électrique qu'il fournit, ce qui permet de déterminer la puissance mécanique demandée au moteur à combustion (2) pour une puissance électrique fournie ; (da13) le rendement de la pile à combustible en fonction de sa charge ; (da14) le rendement de l'onduleur de la pile à combustible ou des panneaux solaires photovoltaïques lorsqu'ils existent ; (da15) la consommation électrique et le débit de fluide de la pompe de circulation des capteurs solaires ; (da16) le prix de vente unitaire de l'énergie électrique fournie au réseau externe ;

Dans d'autres modes de réalisation, au moins une « donnée instantanée » supplémentaire est sélectionnée dans le groupe formé par : (db1) la puissance électrique instantanée produite par chaque générateur de courant présent ; (db2) le régime de rotation de chaque moteur à combustion (2) ; (db3) la consommation instantanée en combustible de l' installation (1) ; (db4) la température du fluide récupérant l'énergie thermique du moteur a combustion (2) ; (db5) la puissance électrique instantanée consommée par l'installation (1) auprès du réseau, obtenue par une mesure directe ; (db6) la puissance instantanée fournie au réseau par l'installation (1), obtenue par une mesure directe ; (db7) le courant, la tension ou la puissance électrique instantanée produite par le panneau solaire photovoltaïque (si ce panneau est présent) ; (db8) la température T1 instantanée ; (db9) la température T2 instantanée ; (db10) la température T3 instantanée; (db11) la température T4 instantanée (db12) la température T5 instantanée (db13) la température de l'air ambiant; (db14) le nombre d'heures de fonctionnement de chaque générateur de courant électrique (principalement moteur à combustion 2 et pile à combustible; (db15) le nombre d'heures de fonctionnement de chaque circuit de pompe à chaleur de l'installation (type à compression de vapeur ou à absorption).

Dans d'autres modes de réalisation, au moins une « donnée cible » supplémentaire est sélectionnée dans le groupe formé par: (dc1) la température T1 et son évolution en fonction notamment de la température extérieure ; (dc2) la température T2 et son évolution en fonction notamment de la température extérieure ; (dc3) la température T3 et son évolution en fonction notamment de la température extérieure ; (dc4) la température T4 et son évolution en fonction notamment de la température souhaitée dans l'enceinte réfrigérée ; (dc5) la température T5 et son évolution en fonction notamment de la température souhaitée dans l'enceinte réfrigérée (dc6) le COP global comme étant le COP global maximal pour l'installation (1) ou l'impact global minimal $CO_2$ de l' installation (1) ; (dc7) le coût énergétique comme étant le coût énergétique minimal de l'installation (1) ; (dc8) le coût de fonctionnement total comme étant le coût de fonctionnement total minimal de l'installation (1).

Dans d'autres modes de réalisation, au moins une « donnée d'ajustement » supplémentaire est sélectionnée dans le groupe formé par: (dd1) le type, le nombre de générateurs de courant en fonctionnement, et la puissance fournie électrique par chacun desdits générateurs ; (dd2) l'affectation des puissances électriques fournies par le ou les générateurs respectivement à l'installation et au réseau externe à l'installation (1) ; (dd3) le type et le nombre de pompes à chaleur en fonctionnement ; (dd4) dans le cas des pompes à chaleur par compression de vapeur, le réglage de débit volumétrique (exprimé en pourcent) imposé par la régulation aux compresseurs pour optimiser l'installation (1). La valeur « actuelle » de la au moins une donnée cible sélectionnée est déterminée de temps en temps ou de manière régulière ou de manière continue.

Dans un mode de réalisation avantageux, on entre pour chaque type de pompe à chaleur, les tables de performances donnant la puissance frigorifique fournie, la puissance calorifique fournie, la puissance électrique consommée, la quantité de combustible consommée s'il y a lieu (cas de la pompe à chaleur à absorption) à l'intérieur de sa plage de fonctionnement. Ces tables de performances sont définies de fait par les températures d'eau de chaque circuit (T1, T2 et T3, T4 et T5), le débit de fluide des échangeurs associés, et par la température d'entrée de l'air ambiant. Le mode de régulation peut prévoir que tout fonctionnement avec un ou plusieurs de ces paramètres en dehors de la plage de fonctionnement définie est prohibé.

Dans un mode de réalisation avantageux, on entre pour chaque compresseur utilisé dans les pompes à chaleur à compression de vapeur, à titre de contrôle complémentaire, les données de base suivantes :

- les tables de performances donnant la puissance frigorifique fournie,

- la puissance calorifique fournie,

- la puissance électrique consommée en fonction de la pression d'aspiration et de la pression de refoulement du compresseur pour un fluide frigorigène donné.

Ces données permettent un recoupement des tables de performance ci-dessus. Elles peuvent également être utilisées comme données de base pour déterminer, pour le système complet, les puissances frigorifiques et calorifiques fournies ainsi que la puissance électrique consommée par les pompes à chaleur à compression de vapeur. Ces données intègrent, pour chaque compresseur, le niveau de débit volumétrique (exprimé typiquement en pourcent) auquel il fonctionne (typiquement de 10% à 100%). Le procédé de régulation de la présente invention permet d'optimiser le fonctionnement combiné d'appareils de cogénération et de systèmes thermodynamiques par exemple de type pompes à chaleur pouvant être issus du marché et provenir de fournisseurs différents, ce qui n'est pas le cas du procédé décrit dans la demande de brevet WO 2011/01573.

Le procédé selon la présente invention utilise les mêmes principes généraux que ceux décrits dans la demande de brevet WO 2011/01573 mais prend par ailleurs particulièrement en compte une plus grande quantités de caractéristiques techniques des appareils de cogénération (en terme de puissance et de données disponibles) et des systèmes thermodynamiques (en particulier la possibilité de disposer de différents types de compresseurs susceptibles d'être rencontrés sur le marché : compresseur à vitesse fixe sans régulation de puissance, compresseur à vitesse fixe mais régulation de puissance, compresseur à vitesse),

Le procédé suivant l'invention prend obligatoirement en compte les caractéristiques suivantes de l'appareil de cogénération :

- État des modes de fonctionnement de l'appareil de cogénération: Marche, Arrêt ou défaut,

- Puissance maximale disponible en fonction de la température extérieure, de l'altitude et éventuellement d'autres paramètres liés au moteur ;

- Tenue à l'impact électrique jusqu'à une valeur d'intensité maximale qu'il soit possible de produire ($I_{max}$ disponible en ampères), c'est-à-dire la capacité à tenir un $I_{max}$ disponible typiquement demandé par la pompe à chaleur, et éventuellement par un réseau électrique local, en assurant un niveau suffisant de qualité du courant (fréquence et voltage instantanés). La tenue à l'impact électrique caractérise d'une manière générale la stabilité d'un système électrique exposé à une charge instantanée accrue (i.e. lorsque la demande en courant augmente soudainement).

Le procédé suivant l'invention prend obligatoirement en compte les caractéristiques suivantes de la pompe à chaleur :

- État des modes de fonctionnement : Marche, Arrêt ou défaut

- Valeur d'intensité maximale $I_{max}$ demandé par le système thermodynamique. Cette valeur correspond à la somme des courants maximum dans les conditions les plus dures. Cette valeur est typiquement égale pour une pompe à chaleur de n compresseurs à :

$I_{max}$ demandé par le système thermodynamique = $I_{max}$ demandé par chaque compresseur + courant de démarrage du dernier compresseur choisi comme étant celui de plus grande taille

- Cette valeur est propre à chaque pompe à chaleur, et est fonction des conditions de fonctionnement et de la taille et du type des composants, en particulier le compresseur.

Le procédé selon l'invention permet d'optimiser le fonctionnement global de l'installation. Cette optimisation intervient sur plusieurs aspects.

Elle intervient d'abord sur le rendement global, par la réutilisation de l'énergie calorifique dite « fatale » au niveau du générateur mais aussi par l'optimisation de la charge respective du ou des générateurs et de la charge du ou des systèmes thermodynamiques associés pour que chacun fonctionne dans le régime de charge qui donne un rendement global associé maximal. Les rendements des moteurs thermiques à gaz tendent à augmenter avec la charge, ceux des compresseurs varient avec les conditions de fonctionnement basse et haute pression mais aussi en fonction de leur vitesse de rotation en passant dans ce dernier cas par un maximum.

Elle intervient sur le fonctionnement même des systèmes dans différentes conditions afin d'assurer que le générateur saura résister sans caler ou trop ralentir à l'impact de charge électrique des compresseurs, Elle peut également limiter la demande des compresseurs en fonction de la capacité du des générateurs. Elle intègre également des stratégies de fonctionnement dégradé prenant en compte l'évolution de besoins thermiques et d'éventuelles limitations de performance du ou des générateurs.

Un avantage du procédé de régulation selon l'invention est de donner à l'installation qu'il régule une flexibilité d'utilisation. La flexibilité d'utilisation permet en permanence le choix optimal du ou des types d'énergies utilisées et/ou fournies, en fonction de paramètres externes et de paramètres cibles (objectifs), moyennant une méthode de régulation appropriée.

La flexibilité d'utilisation prend en compte notamment la multiplicité d'énergies susceptibles d'alimenter les différents composants du système 1 selon l'invention, ainsi que la multiplicité de flux d'énergie susceptibles d'être produits par le système 1. L'ensemble des modules ci-dessus est alimenté par une ou plusieurs des énergies suivantes : carburants fossiles (notamment gaz naturel, gaz de pétrole liquéfié, gasoil, essence), biocarburants, hydrogène et courant électrique. Les modules de pompes à chaleur peuvent faire appel typiquement aux deux cycles classiques suivants: le cycle de réfrigération à compression mécanique de vapeur et le cycle à absorption. Les réseaux d'eau classiques reliés aux pompes à chaleur peuvent être complétés dans le dispositif par un réseau d'eau issue de capteurs solaires thermiques. Les modules générateurs d'électricité peuvent faire appel à divers technologie de type moteur thermique et alternateur, panneau solaire photovoltaïque, éolienne, turbine ou pile à combustible

La flexibilité d'utilisation est rendue possible grâce au procédé de régulation globale de l'installation dans son ensemble (pompe à chaleur et appareils de cogénération) qui permet la prise en compte optimale entre autres des paramètres cibles (objectifs) suivants :

(i) Priorité donnée au COP de l'installation. Des coefficients paramétrables permettent d'exprimer les différentes énergies extérieures au dispositif (par exemple l'électricité du réseau, l'énergie thermique des capteurs solaires et l'énergie électrique photovoltaïque) en termes d'énergie primaire et d'impact $CO_2$ afin de donner une vue globale du COP de l'installation. La régulation prend en compte dans l'optimisation globale le rendement de l'appareil de cogénération. Ainsi et entre autres règles de fonctionnement :

- On cherche à faire fonctionner les appareils de cogénération dans leur zone de rendement maximal (à pleine charge par exemple pour un moteur thermique fonctionnant au gaz naturel) ;

- On récupère le maximum de rejet thermique calorifique du moteur thermique. Par exemple, si les besoins du site en eau très chaude sont inférieurs à la production du moteur thermique, on cumule cette production thermique à l'eau chaude fournie par la pompe à chaleur ;

- On cherche à faire fonctionner l'ensemble des modules pompes à chaleur en charge partielle plutôt que d'en stopper certaines afin de réduire la charge sur chaque échangeur et ainsi permettre un fonctionnement plus efficace énergétiquement.

(ii) Priorité donnée au coût de fonctionnement énergétique de l'installation :

L'approche est similaire à l'optimisation précédente, mais les coefficients paramétrables pour chaque type d'énergie deviennent les suivants :

- Coût d'achat de chaque énergie extérieure au dispositif (typiquement énergie électrique issue du réseau ou énergie de type carburant fossile ou biogaz) au moment de l'utilisation. Par exemple, le coût de l'énergie électrique peut varier suivant la période de l'année mais peut aussi en fonction de seuils de consommation dans la journée ou dans l'année, ce ou ces seuils étant lié(s) à l'abonnement électrique de l'installation considérée. Ces pondérations peuvent bien sûr évoluer au cours de la vie de l'installation et sont donc paramétrables dans le cadre de la méthode de régulation globale du dispositif.

- Ce dispositif peut optionnellement voir ses paramètres économiques mis à jour par un système centralisé intégrant la localisation de l'équipement ainsi que des projections d'environnement climatologique permettant une optimisation globale du système dans le temps ou bien recevoir des impositions fonctionnelles lié à des limitations ponctuelles de certaines source d'énergie.

- Prix de revente éventuel au réseau de l'énergie électrique pouvant si nécessaire être produite par le ou les appareils de cogénération. Ce prix peut également varier, selon des règles en général similaires à celles qui s'appliquent au coût d'achat de l'énergie électrique.

(iii) Priorité donnée au coût de fonctionnement total de l'installation (notamment le coût énergétique, le coût de maintenance qui inclut notamment le coût de démontage et le coût de remplacement). On accorde ainsi une importance particulière à la durée de vie de certains composants critiques comme les moteurs à combustion ou les piles à combustible.

## Revendications

1. Procédé de gestion d'une installation comprenant un ou plusieurs appareils de cogénération et un ou plusieurs systèmes thermodynamiques tels que des pompes à chaleur, ainsi qu'au moins une machine informatique, ledit procédé comprenant les étapes suivantes :

(a) On entre des données dites « données de base » dans ladite machine informatique, lesdites données de base comprenant au moins la tenue à l'impact électrique de l'appareil de cogénération, et la valeur d'intensité maximale de la pompe à chaleur,

(b) on entre des données dites « données instantanées » dans ladite machine informatique, lesdites données instantanées comprenant au moins l'état de l'appareil de cogénération, l'état de la pompe à chaleur et la puissance électrique demandée par la pompe à chaleur,

(c) on définit des données dites « données cibles » à laquelle sont affectées une valeur respective dite « valeur cible » dans ladite machine informatique, ces données cibles comprenant au moins la production minimale et/ou maximale d'électricité par l'installation, éventuellement la consommation maximale d'électricité et d'énergie primaire, et au moins une parmi : les températures d'eau très chaude $(T2)$, d'eau chaude $(T1)$, d'eau froide $(T3)$, d'évaporation de fluide frigorigène $(T4, T5)$, et la demande en électricité du réseau local,

(d) on régule l'installation à l'aide de ladite machine informatique de manière à atteindre, pour chacune des données cibles sélectionnées, la ou les valeurs cibles qui leur ont été affectées, la régulation étant effectuée en comparant la valeur actuelle de la donnée cible sélectionnée, en prenant en compte la ou les données de base sélectionnées ainsi que la ou les données instantanées sélectionnées, et en ajustant au moins une donnée dite « donnée d'ajustement », de manière à rapprocher la valeur actuelle de chaque donnée cible sélectionnée de la valeur cible qui lui a été affectée à l'étape c), la au moins une donnée d'ajustement comprenant la puissance électrique fournie par l'appareil de cogénération.

2. Procédé selon la revendication 1, **caractérisé en ce que** au moins une « donnée de base » supplémentaire de l'étape (a) est sélectionnée dans le groupe formé par (da1) le coût unitaire du combustible de chaque moteur à combustion (2), pile à combustible et pompe à chaleur à absorption utilisé dans le système; (da2) le contenu énergétique de chaque combustible ; (da3) l'impact $CO_2$ de chaque combustible par unité de masse ; (da4) le rendement énergétique de chaque moteur à combustion (2) en fonction de sa charge et de sa vitesse de rotation, ce qui permet de déterminer la quantité de $CO_2$ rejetée par unité de puissance mécanique produite par ce moteur à combustion (2) ; (da5) la puissance nominale à pleine charge de chaque moteur à combustion (2) en fonction de sa vitesse de rotation ; (da6) le pourcentage de puissance thermique récupérée sur le circuit de refroidissement du moteur à combustion (2) et le pourcentage de puissance thermique récupéré sur les gaz d'échappement et/ou la quantité de $CO_2$ rejetée par unité de puissance thermique produite par le moteur à combustion (2), (da7) le coût unitaire de l'énergie électrique fournie par le réseau externe ; (da8) la durée de vie de chaque générateur en fonction de sa charge ; (da9) le coût de maintenance de chaque générateur en fonction du nombre d'heures de fonctionnement ; (da10) le coût de démontage et de remplacement de chaque générateur ; (da11) la durée de vie, le coût de maintenance, le coût de démontage et de remplacement de chaque type de pompe à chaleur ; (da12) le rendement de l'alternateur en fonction de la puissance électrique qu'il fournit, ce qui permet de déterminer la puissance mécanique demandée au moteur à combustion (2) pour une puissance électrique fournie ; (da13) le rendement de la pile à combustible en fonction de sa charge ; (da14) le rendement de l'onduleur de la pile à combustible ou des panneaux solaires photovoltaïques lorsqu'ils existent ; (da15) la consommation électrique et le débit de fluide de la pompe de circulation des capteurs solaires ; (da16) le prix de vente unitaire de l'énergie électrique fournie au réseau externe ;

3. Procédé selon la revendication 1 ou 2, **caractérisé en ce que** au moins une « donnée instantanée » supplémentaire est sélectionnée dans le groupe formé par : (db1) la puissance électrique instantanée produite par chaque générateur de courant présent ; (db2) le régime de rotation de chaque moteur à combustion (2) ; (db3) la consommation instantanée en combustible de l'installation (1); (db4) la température du fluide récupérant l'énergie thermique du moteur a combustion (2) ; (db5) la puissance électrique instantanée consommée par l'installation (1) auprès du réseau, obtenue par une mesure directe ; (db6) la puissance instantanée fournie au réseau par l'installation (1), obtenue par une mesure directe ; (db7) le courant, la tension ou la puissance électrique instantanée produite par le panneau solaire photovoltaïque (si ce panneau est présent) ; (db8) la température T1 instantanée ; (db9) la température T2 instantanée ; (db10) la température T3 instantanée; (db11) la température T4 instantanée (db12) la température T5 instantanée (db13) la température de l'air ambiant ; (db14) le nombre d'heures de fonctionnement de chaque générateur de courant électrique (principalement moteur à combustion 2 et pile à combustible; (db15) le nombre d'heures de fonctionnement de chaque circuit de pompe à chaleur de l'installation (type à compression de vapeur ou à absorption).

4. Procédé selon l'une des revendications précédentes, **caractérisé en ce que** au moins une « donnée cible » supplémentaire est sélectionnée dans le groupe formé par: (dc1) la température T1 et son évolution en fonction notamment de la température extérieure ; (dc2) la température T2 et son évolution en fonction notamment de la température extérieure ; (dc3) la température T3 et son évolution en fonction notamment de la température extérieure ; (dc4) la température T4 et son évolution en fonction notamment de la température souhaitée dans l'enceinte réfrigérée ; (dc5) la température T5 et son évolution en fonction notamment de la température souhaitée dans l'enceinte réfrigérée (dc6) le COP global comme étant le COP global maximal pour l'installation (1) ou l'impact global minimal $CO_2$ de l'installation (1) ; (dc7) le coût énergétique comme étant le coût énergétique minimal de l'installation (1) ; (dc8) le coût de fonctionnement total comme étant le coût de fonctionnement total minimal de l'installation (1).

5. Procédé selon l'une des revendications précédentes, **caractérisé en ce que** au moins une « donnée d'ajustement » supplémentaire est sélectionnée dans le groupe formé par: (dd1) le type, le nombre de générateurs de courant en fonctionnement, et la puissance fournie électrique par chacun desdits générateurs ; (dd2) l'affectation des puissances électriques fournies par le ou les générateurs respectivement à l'installation et au réseau externe à l'installation (1) ; (dd3) le type et le nombre de pompes à chaleur en fonctionnement ; (dd4) dans le cas des pompes à chaleur par compression de vapeur, le réglage de débit volumétrique (exprimé en pourcent) imposé par la régulation aux compresseurs pour optimiser l'installation (1).

6. Procédé selon l'une des revendications précédentes, **caractérisé en ce que** la valeur « actuelle » de la au moins une donnée cible sélectionnée est déterminée de temps en temps ou de manière régulière ou de manière continue.

7. Procédé selon l'une des revendications précédentes, **caractérisé en ce que** lesdites données de base peuvent être entrées dans la machine informatique soit lors de sa programmation initiale, soit lors de la mise en route de l'installation, soit encore par l'utilisateur de l'installation, au cours du temps pendant l'utilisation de l'installation.

**Patentansprüche**

1. Verfahren zum Verwalten einer Anlage, die ein oder mehrere Geräte zur Kraft-Wärme-Kopplung und ein oder mehrere thermodynamische Systeme, wie zum Beispiel Wärmepumpe, sowie mindestens ein Computersystem umfasst, wobei das Verfahren die folgenden Schritte umfasst:

(a) Eingabe der sogenannten "Basisinformationen" in das Computersystem, wobei die Basisinformationen mindestens die Beständigkeit gegenüber elektrischer Einwirkung des Geräts zur Kraft-Wärme-Kopplung und den Wert maximaler Stärke der Wärmepumpe umfassen,
(b) Eingabe der sogenannten "Momentaninformationen" in das Computersystem, wobei die Momentaninformationen mindestens den Zustand des Geräts zur Kraft-Wärme-Kopplung, den Zustand der Wärmepumpe und die von der Wärmepumpe geforderte elektrische Leistung umfassen,

(c) Definition der sogenannten "Zielinformationen", welchen ein jeweiliger so genannter "Zielwert" zugewiesen wird, in dem Computersystem, wobei diese Zielwerte mindestens die Mindestproduktion und/oder Höchstproduktion von Elektrizität durch die Anlage, eventuell den maximalen Stromverbrauch und maximalen Verbrauch an Primärenergie umfassen und mindestens einen der folgenden: die Temperaturen sehr heißen Wassers ($T_2$), heißen Wassers ($T_1$), kalten Wassers ($T_3$), der Verdampfung von Kühlmittel ($T_4$, $T_5$) und die Elektrizitätsnachfrage des lokalen Netzwerks,

(d) Regulierung der Anlage mit Hilfe des Computersystems derart, dass für jedes der ausgewählten Ziele der Zielwert oder die Zielwerte erreicht werden, die ihnen zugewiesen wurden, wobei die Regulierung erfolgt, indem der aktuelle Wert der ausgewählten Zielinformation verglichen wird, indem der ausgewählte Zielwert oder die ausgewählten Zielwerte genommen werden, indem der oder die ausgewählten Basisinformationen sowie die ausgewählte(n) Momentaninformation(en) genommen wird / werden, und indem mindestens eine sogenannte "Einstellinformation" derart eingestellt wird, dass der aktuelle Wert jeder ausgewählten Zielinformation, die ihm bei Schritt c) zugewiesen wurde, angenähert wird, wobei die mindestens eine Einstellinformation die elektrische Leistung, die von dem Gerät zur gemeinsamen Erzeugung geliefert wird, umfasst.

2. Verfahren nach Anspruch 1, **dadurch gekennzeichnet, dass** mindestens eine zusätzliche "Zielinformation" des Schritts (a) aus der Gruppe ausgewählt wird, die aus (da1) dem Einzelpreis des Kraftstoffs jeder Brennkraftmaschine (2), Brennstoffzelle und Absorptions-Wärmepumpe, die in dem System verwendet wird / werden; (da2) dem Energiegehalt jedes Kraftstoffs; (da3) der $CO_2$-Belastung jedes Kraftstoffs pro Masseeinheit; (da4) der Energieeffizienz jeder Brennkraftmaschine (2) in Abhängigkeit von ihrer Last und ihrer Drehzahl, was es erlaubt, die Menge an $CO_2$ zu bestimmen, die pro mechanischer Leistungseinheit, die von dieser Brennkraftmaschine (2) erzeugt wird, ausgestoßen wird; (da5) der Nennleistung bei voller Last jeder Brennkraftmaschine (2) in Abhängigkeit von ihrer Drehzahl; (da6) dem Wärmeleistungsprozentsatz, der auf dem Kühlkreislauf der Brennkraftmaschine (2) zurückgewonnen wird, und dem Wärmeleistungsprozentsatz, der auf den Abgasen und/oder der Menge an $CO_2$, die pro Wärmeleistungseinheit, die von der Brennkraftmaschine (2) erzeugt wird, ausgestoßen wird, (da7) dem Einzelpreis der elektrischen Energie, die von dem externen Netzwerk geliefert wird; (da8) der Lebensdauer jedes Generators in Abhängigkeit von seiner Last; (da9) dem Wartungspreis jedes Generators in Abhängigkeit von der Anzahl Betriebsstunden; (da10) dem Demontage- und Ersatzpreis jedes Generators; (da11) der Lebensdauer, dem Wartungspreis, dem Demontage- und Ersatzpreis jedes Wärmepumpentyps; (da12) der Leistung des Wechselstromgenerators in Abhängigkeit von der elektrischen Leistung, die er liefert, was es erlaubt, die von der Brennkraftmaschine (2) verlangte mechanische Leistung für eine gelieferte elektrische Leistung zu bestimmen; (da13) die Leistung der Brennstoffzelle in Abhängigkeit von ihrer Last; (da14) die Leistung des Wechselrichters der Brennstoffzelle oder der Fotovoltaik-Solarpaneele, falls sie existieren; (da15) dem Stromverbrauch und dem Fluiddurchsatz der Umwälzpumpe der Solarkollektoren; (da16) dem Einzelverkaufspreis der an das externe Netzwerk gelieferten elektrischen Energie, besteht.

3. Verfahren nach Anspruch 1 oder 2, **dadurch gekennzeichnet, dass** mindestens eine zusätzliche "Momentaninformation" aus der Gruppe ausgewählt wird, die besteht aus: (db1) der elektrischen Momentanleistung, die von jedem vorhandenen Stromgenerator erzeugt wird; (db2) der Drehzahl jeder Brennkraftmaschine (2); (db3) dem Momentanverbrauch an Brennstoff der Anlage (1); (db4) der Temperatur des Fluids, das die Wärmeenergie der Brennkraftmaschine (2) zurückgewinnt; (db5) der elektrischen Momentanleistung, die von der Anlage (1) beim Netz verbraucht wird, erzielt durch eine direkte Messung; (db6) der Momentanleistung, die von der Anlage (1) an das Netzwerk von der Anlage (1) geliefert wird, erzielt durch eine direkte Messung; (db7) dem Strom, der Spannung oder der elektrischen Momentanleistung, die von dem Fotovoltaik-Solarpaneel erzeugt wird (wenn dieses Paneel vorhanden ist); (db8) der Momentantemperatur $T_1$; (db9) der Momentantemperatur $T_2$; (db10) der Momentantemperatur $T_3$; (db11) der Momentantemperatur $T_4$; (db12) der Momentantemperatur $T_5$; (db13) der Temperatur der Umgebungsluft; (db14), der Anzahl Betriebsstunden jedes Stromgenerators (in der Hauptsache Brennkraftmaschine (2) Brennstoffzelle); (db15) der Anzahl Betriebsstunden jedes Wärmepumpenkreislaufs der Anlage (des Typs mit Dampfkompression oder Absorption).

4. Verfahren nach einem der vorhergehenden Ansprüche, **dadurch gekennzeichnet, dass** mindestens eine zusätzliche "Zielinformation" aus der Gruppe ausgewählt wird, die besteht aus: (dc1) der Temperatur $T_1$ und ihrer Entwicklung insbesondere in Abhängigkeit von der Außentemperatur; (dc2) der Temperatur $T_2$ und ihrer Entwicklung insbesondere in Abhängigkeit von der Außentemperatur; (dc3) der Temperatur $T_3$ und ihrer Entwicklung insbesondere in Abhängigkeit von der Außentemperatur; (dc4) der Temperatur $T_4$ und ihrer Entwicklung insbesondere in Abhängigkeit von der in dem gekühlten Einschluss gewünschten Temperatur; (dc5) der Temperatur $T_5$ und ihrer

Entwicklung insbesondere in Abhängigkeit von der in dem gekühlten Einschluss gewünschten Temperatur; (dc6) dem globalen COP als maximaler globaler COP für die Anlage (1) oder die globale minimale $CO_2$-Auswirkung der Anlage (1); (dc7) dem Energiepreis als Mindestenergiepreis der Anlage (1); (dc8) den Gesamtbetriebskosten als Mindest-Gesamtbetriebskosten der Anlage (1).

**5.** Verfahren nach einem der vorhergehenden Ansprüche, **dadurch gekennzeichnet, dass** mindestens eine zusätzliche "Einstellungsinformation" aus der Gruppe ausgewählt wird, die besteht aus: (dd1) dem Typ, der Anzahl der Stromgeneratoren in Betrieb und der elektrischen Leistung, die von jedem der Generatoren geliefert wird; (dd2) der Zuweisung der elektrischen Leistungen, die von dem oder den Generatoren jeweils an die Anlage und an das der Anlage (1) externe Netzwerk geliefert werden; (dd3) dem Typ und der Anzahl der Wärmepumpen in Betrieb; (dd4) in dem Fall von Wärmepumpen durch Dampfkompression, der Einstellung des Volumenstroms (ausgedrückt in Prozent), die den Kompressoren zum Optimieren der Anlage (1) von der Regulierung auferlegt wird.

**6.** Verfahren nach einem der vorhergehenden Ansprüche, **dadurch gekennzeichnet, dass** der "aktuelle" Wert der mindestens einen ausgewählten Zielinformation von Zeit zu Zeit oder regelmäßig oder kontinuierlich bestimmt wird.

**7.** Verfahren nach einem der vorhergehenden Ansprüche, **dadurch gekennzeichnet, dass** die Basisinformationen in das Computersystem entweder bei seiner anfänglichen Programmierung oder bei der Inbetriebnahme der Anlage oder auch vom Benutzer der Anlage im Laufe der Zeit während der Nutzung der Anlage eingegeben werden können.

**Claims**

**1.** Method of managing a plant comprising one or more cogenerating installations and one or more thermodynamic systems such as heat pumps, as well as at least one computing machine, said method comprising the following steps:

(a) "Base data" is entered into said computing machine, said base data comprising at least the resilience to electrical impact of the cogenerating installation, and the value of maximum intensity of the heat pump,
(b) "instantaneous data" is entered into said computing machine, said instantaneous data comprising at least the state of the cogenerating installation, the state of the heat pump and the electrical power demanded by the heat pump,
(c) "target data" is defined, to which is assigned a respective "target value" in said computing machine, this target data comprising at least the minimum and/or maximum production of electricity by the plant, optionally the maximum consumption of electricity and of primary energy, and at least one from among: the temperatures of very hot water (T2), of hot water (T1), of cold water (T3), of evaporation of coolant fluid (T4, T5), and the electricity demand of the local network,
(d) the plant is regulated with the aid of said computing machine in such a way as to attain, for each of the target data selected, the target value or values which have been assigned thereto, the regulation being performed by comparing the current value of the target data item selected, taking into account the basic data item or items selected, as well as the instantaneous data item or items selected, and by adjusting at least one "adjustment data item", in such a way that the current value of each target data item selected is made to approach the target value assigned to it in step c), the at least one adjustment data item comprising the electrical power provided by the cogenerating installation.

**2.** Method according to claim 1, **characterised in that** at least one additional "basic data item" from step (a) is selected in the group formed from (da1) the unit cost of the fuel of each combustion engine (2), fuel cell and absorption heat pump used in the system; (da2) the energy content of each fuel; (da3) the $CO_2$ impact of each fuel per mass unit; (da4) the energy yield of each combustion engine (2) depending on its load and rotational speed, which enables the determination of the quantity of $CO_2$ emitted per mechanical power unit generated by this combustion engine (2); (da5) the rated output power at full load of each combustion engine (2) depending on its rotational speed; (da6) the percentage of thermal power recovered from the cooling circuit of the combustion engine (2) and the percentage of thermal power recovered from the exhaust gases and/or the quantity of $CO_2$ emitted per thermal power unit generated by the combustion engine (2), (da7) the unit cost of the electrical energy supplied by the external network; (da8) the lifespan of each generator depending on its load; (da9) the maintenance cost of each generator depending on the number of operating hours; (da10) the removal and replacement cost of each generator; (da11) the lifespan, maintenance cost, removal and replacement cost of each type of heat pump; (da12) the yield of the alternator depending on the electrical power that it supplies, which enables the determination of the mechanical power demanded from the combustion engine (2) for a given electrical power; (da13) the yield of the fuel cell depending on its load; (da14) the yield of the inverter of the fuel cell or of the photovoltaic solar panel where present; (da15) the electricity consumption and fluid flow rate of the solar collector circulation pump; (da16) the unit sales price of the electrical energy supplied to the external network;

3.  Method according to claim 1 or 2, **characterised in that** at least one additional "instantaneous data item" is selected in the group formed from: (db1) the instantaneous electrical power generated by each current generator present; (db2) the rotational regime of each combustion engine (2); (db3) the instantaneous fuel consumption of the plant (1); (db4) the temperature of the fluid collecting the heat energy from the combustion engine (2); (db5) the instantaneous electrical power consumed by the plant (1) from the network, obtained by a direct measurement; (db6) the instantaneous power supplied to the network by the plant (1), obtained by a direct measurement; (db7) the instantaneous current, voltage or electrical power generated by the photovoltaic solar panel (if this panel is present); (db8) the instantaneous temperature T1; (db9) the instantaneous temperature T2; (db10) the instantaneous temperature T3; (db11) the instantaneous temperature T4; (db12) the instantaneous temperature T5; (db13) the ambient air temperature; (db14) the number of operating hours of each electrical current generator (mainly combustion engine 2 and fuel cell); (db15) the number of operating hours of each heat pump circuit of the plant (absorption or vapour-compression type heat pumps).

4.  Method according to one of the previous claims, **characterised in that** at least one additional "target data item" is selected in the group formed from: (dc1) the temperature T1 and its evolution in particular depending on the external temperature; (dc2) the temperature T2 and its evolution in particular depending on the external temperature; (dc3) the temperature T3 and its evolution in particular depending on the external temperature; (dc4) the temperature T4 and its evolution in particular depending on the desired temperature inside the cooled enclosure; (dc5) the temperature T5 and its evolution in particular depending on the desired temperature of the cooled enclosure; (dc6) the overall COP considered as the overall maximum COP for the plant (1) or the overall minimum $CO_2$ impact of the plant (1); (dc7) the energy costs considered as the minimum energy cost of the plant (1); (dc8) the total operating cost considered as the total minimum operating cost of the plant (1).

5.  Method according to one of the previous claims, **characterised in that** at least one additional "adjustment data item" is selected in the group formed from: (dd1) the type, the number of current generators in operation, and the electrical power supplied by each of said generators; (dd2) the allocation of the electrical powers supplied by the generator or generators respectively to the plant and to the network external to the plant (1); (dd3) the type and the number of heat pumps in operation; (dd4) in the case of vapour-compression heat pumps, the volume flow rate setting (expressed as a percentage) imposed by the regulation on compressors to optimise the plant (1).

6.  Method according to one of the previous claims, **characterised in that** the "current" value of the at least one selected target data item is determined from time or time or in a regular or in a continuous manner.

7.  Method according to one of the previous claims, **characterised in that** said basic data can be entered into the computing machine either during its initial programming, or during start-up of the plant, or even by the plant user, over time while using the plant.

Figure 1

Figure 2

**EP 2 856 040 B1**

**RÉFÉRENCES CITÉES DANS LA DESCRIPTION**

**Documents brevets cités dans la description**

- FR 2927161

- WO 201101573 A